# FASCICULE DE BREVET EUROPEEN

(11) **EP 2 582 249 B1**
(45) Date de publication et mention de la délivrance du brevet: **06.04.2016**
(21) Numéro de dépôt: 11728346.5
(22) Date de dépôt: 01.06.2011
(51) Int. Cl.: A21D 13/00, A23L 5/10, A23B 4/06

(54) **PROCEDE DE PRE-CUISSON EN SURFACE DE PRODUITS ALIMENTAIRES EN VUE DE LEUR MARQUAGE OU DE LEUR RAIDISSAGE**
VERFAHREN ZUM VORKOCHEN DER OBFLÄCHE VON LEBENSMITTELPRODUKTEN FÜR IHRE MARKIERUNG ODER HÄRTUNG
METHOD OF PRECOOKING THE SURFACE OF FOOD PRODUCTS WITH A VUE TO MARKING THEM OR HARDENING THEM

(30) Priorité: 17.06.2010 FR 1054830
(43) Date de publication de la demande: 24.04.2013
(73) Titulaire: L'AIR LIQUIDE, Société Anonyme pour l'Etude et l'Exploitation des Procédés Georges Claude, 75007 Paris (FR)
(72) Inventeur: COUSIN, Franck, F-44250 Saint Brevin Les Pins (FR); PERROT- MINOT, Maryline, F-42410 Verlieu (FR)
(74) Mandataire: Mellul-Bendelac, Sylvie Lisette
(86) Numéro de dépôt international: PCT/FR2011/051257
(87) Numéro de publication internationale: WO 2011/157921

(56) Documents cités:
- CA-A1- 2 685 913
- US-A1- 2009 202 690

## Description

La présente invention concerne le domaine des procédés de cuisson en surface des produits alimentaires, elle s'intéresse en particulier au cas des produits carnés, elle s'intéresse également au cas du pain de mie, tout particulièrement au cas du pain de mie dit « sans croute ».

On sait qu'un des nouveaux marchés de ce secteur industriel est en demande constante de procédés permettant de réduire les temps de cuisson de ces produits, et ce tout en conservant un aspect, un marquage, de « cuisson par grill » qui donne au consommateur final la sensation d'un produit artisanal.

On connaît ainsi la proposition récente dans les rayons des supermarchés de viandes pour grillades (par exemple des entrecôtes ou encore des steaks hachés) sous emballages, au rayon frais, les produits étant « pré-marqués » (le dessin du marquage leur donnant un aspect de cuisson par grill, avec les bandes caractéristiques en surface), ils sont alors prêts à être cuits, à la poêle, au four à micro-ondes ou autre, mais en tout état de cause en un temps très court, pour attirer les consommateurs toujours pressés par le temps (typiquement 1 à 2 minutes).

Reste que ces prétraitements représentent un véritable challenge pour respecter la réglementation et notamment garantir une température moyenne pendant le processus de « pré-cuisson » ou « marquage » inférieure à ce que préconise la réglementation.

En pratique, les industriels mettent en oeuvre une étape de marquage thermique (grilles, fours etc...) suivie d'une étape de refroidissement rapide pour respecter la législation sur les produits frais puisqu'en effet, selon cette législation, il est interdit de vendre un produit dénommé « frais » si ce produit est ou a été congelé, donc a été passé en dessous de son palier de congélation. A titre d'exemple, signalons le cas d'une viande bovine à 20% de matière grasse, ayant un palier de congélation situé à -1,17°C, ce palier est donc très facile à atteindre.

Le challenge pour l'industriel est donc de marquer en surface sans transférer trop de chaleur dans le produit, pour ne pas devoir ensuite passer dans un système de refroidissement trop « violent », descendant en dessous du palier de congélation.

D'autre part, les produits frais ne doivent pas dépasser 4°C pour rester dans une maîtrise de développement bactérien (la température de 4°C est celle traditionnellement recommandée dans les réfrigérateurs domestiques).

On constate alors en pratique d'une part que ces systèmes sont onéreux et encombrants, d'autre part le fait que les températures obtenues en sortie du procédé de chauffe (marquage) sont trop élevées, rendant nécessaire l'intervention en aval de systèmes de surgélation pour inhiber rapidement le transfert thermique vers le coeur du produit, surgélateurs qui génèrent trop souvent une descente en surface trop froide, en dessous du point de congélation.

Il faut signaler que l'on trouve également de tels produits au rayon surgelés, les produits subissant après marquage thermique une étape de surgélation, ici encore le consommateur doit pouvoir passer ce produit à la poêle ou au four à micro-ondes ou autre, en un temps très court, tout en conservant cette aspect « grillade marquée ». On l'aura compris, le marquage de tels produits avant leur congélation pose alors moins de contraintes techniques.

Un des objectifs de la présente invention est alors de proposer une nouvelle méthode de « pré-cuisson » ou « marquage » de tels produits carnés, permettant d'apporter une meilleure réponse (et notamment une réponse plus fiable) à l'ensemble des attentes techniques de ce secteur industriel, elle s'attache en fait à régler le problème à sa source : maîtriser le marquage thermique du produit pour ne pas avoir à le refroidir.

Mais comme signalé plus haut, la présente invention s'intéresse également au cas des pains de mie, et notamment au cas des pains de mie sans croute.

La découpe ou le tranchage de produits dits moelleux tels les pains de mie, génère des difficultés dans les procédés industriels existants, notamment lorsque de hautes cadences de coupe sont nécessaires. A titre illustratif, des lignes de fabrication de pains de mie atteignent couramment 2400 pains/heure.

Par définition, le produit étant moelleux, la forme originelle du produit n'est pas stabilisée durant la coupe, d'où l'observation des phénomènes suivants :
- irrégularités observées sur la tranche ;
- le glissement des lames sur le produit, qui génère des ralentissements et la production de fines (des particules de pain par exemple) ;
- l'échauffement des lames de coupe provoque des micro-fusions sur le produit.

On sait qu'il a été proposé des solutions de « croutage » de la surface de tels produits avant découpe, par l'apport de froid ou de chaud, ceci pour préserver la forme du produit lors de son arrivée à la découpe.

On sait que le terme de « croutage » désigne couramment dans cette industrie l'action de raidissage du produit de façon partielle, au niveau d'au moins une de ses surfaces, le plus souvent avant une opération ultérieure qui peut être une congélation à coeur dans un autre dispositif ou qui peut être également une opération qui n'est pas une congélation telle un tranchage, un enrobage etc...

Revenons maintenant sur les deux techniques évoquées ci-dessus de croutage de produits moelleux par apport de froid ou de chaleur. Comme on va l'expliquer ci-dessous, elles présentent des inconvénients :
- la technique d'apport de chaleur vise à cuire en surface le produit, pour le rigidifier et ainsi améliorer la tenue à la coupe, le plus souvent par l'intervention d'Infrarouges comme dans le document EP-1 586 428. Cette technique génère dans la plupart des cas un changement d'aspect sur le produit, ce qui est bien entendu préjudiciable. L'effet de cuisson en surface est souvent obtenu par l'application d'infrarouges, le temps de contact devant être court pour ne pas impacter la température moyenne du produit.

Dans ces conditions, il est difficile de trouver les réglages optimums entre croutage et élévation excessive de la température, en particulier quand il faut répondre à de hautes cadences de coupes.

Il faut également signaler que dans ce procédé, il est nécessaire de réfrigérer les aliments après passage aux infrarouges, afin de prévenir une prolifération de bactéries.

Le document EP-1 586 428 cité ci-dessus illustre l'état de la technique de ce secteur, le document s'attache à proposer des conditions de fabrication de pain de mie tranché sans croûte, comprenant des étapes de cuisson du pain de mie, d'élimination de la croûte latérale du pain de mie et de tranchage transversale du pain de mie sans croûte, où le pain de mie est soumis, après l'étape d'élimination de la croûte et avant l'étape de tranchage, à un rayonnement infrarouge pendant une durée déterminée.
- la technique d'apport de froid vise quant à elle à surgeler rapidement en surface le produit, afin d'en stabiliser la surface, en la raidissant, avant le tranchage ultérieur.

Ces croûtages au froid peuvent être réalisés dans des équipements de froid mécanique ou de froid cryogénique.

Les inconvénients attachés à ces techniques au froid sont notamment les suivants :
- Le besoin d'implanter dans la chaine de fabrication un équipement additionnel pour réaliser le croutage, ce qui génère d'une part un cout et d'autre part la nécessité d'une surface additionnelle au sol.
- Les températures basses générées à la surface du produit engendrent un piégeage de l'eau qui peut accélérer un développement bactérien et particulièrement des moisissures dans le cas du pain de mie.

Comme on le verra plus en détail dans ce qui suit, la présente invention propose une méthode de « pré-cuisson » ou « marquage » ou « croutage » en surface de produits alimentaires, et notamment mais ce ne sont que certaines des applications possibles, de produits carnés ou de pains de mie, qui met en oeuvre une flamme oxyhydrique H₂/O₂ ou H₂/air, flamme dont les avantages sont considérables, et notamment les suivants :
- L'utilisation d'une flamme oxyhydrique permet de maîtriser les températures de traitement thermique : l'hydrogène dispose d'un pouvoir calorifique naturellement bas, ce qui permet d'atteindre des températures de flammes basses (2.8 kWh/m³ pour l'hydrogène, 9.4 pour le méthane, 24 pour le propane etc...), qui transfèrent peu d'énergie.
- L'oxygène et l'action sur la teneur en oxygène permet de diminuer la température de la flamme (en suroxygénant) pour s'adapter aux caractéristiques du traitement visé.
- La distance entre le produit et le brûleur détermine la température du traitement, la température adiabatique de la flamme n'étant pas la plus éloignée du brûleur. La température étant réglée, il reste à ajuster le temps du traitement par le réglage de la vitesse de défilement du brûleur, afin de respecter un couple température/temps.
- L'hydrogène génère des transferts thermiques plus importants en convection, au détriment des transferts par rayonnements (Infrarouges de l'art antérieur) qui, eux, pénètrent dans le produit (ce qui n'est pas souhaitable, on rappelle que l'on souhaite ici cuire ou précuire seulement superficiellement, en aucune manière faire un traitement thermique en profondeur de la viande ou du pain, ce qui risquerait de les cuire à coeur).
- L'utilisation de gaz « nobles » comme l'hydrogène et l'oxygène permet d'obtenir une combustion propre, sans émission de gaz nocifs et sans production de suies.

On pourra utiliser, pour un tel traitement selon l'invention, des brûleurs commercialement disponibles et notamment des brûleurs par ailleurs connus d'autres industries, notamment verrières (brûleurs FMT, brûleurs tube dans trou etc...).

Le document US2009/0202690 décrit un procédé et un appareil de cuisson du type four ou barbecue utilisant l'hydrogène comme gaz combustible.

La présente invention concerne alors un procédé de cuisson (pré-cuisson) en surface, de préférence en continu, de produits alimentaires, se caractérisant en ce que l'on met en contact tout ou partie de la surface du produit avec la flamme produite par un brûleur, la flamme mise en oeuvre étant une flamme oxyhydrique, préférentiellement une flamme hydrogène/oxygène.

La présente invention trouve une application tout particulièrement intéressante pour le traitement des produits transformés à base de viande ou de pièces de viandes telles les pièces pour grillades, notamment pour des traitements de « marquage » de la surface de la viande pour vente de la pièce au rayon frais, mais comme on l'a vu d'autres produits tels les fromages sont intéressés par de tels marquages.

Et selon un des modes de mise en oeuvre de l'invention, le traitement de cuisson en surface selon l'invention n'est suivi d'aucun traitement de refroidissement de la pièce traitée.

Mais selon un autre des modes de mise en oeuvre de l'invention celle-ci trouve son application dans le domaine des surgelés, et ainsi, après pré-cuisson à la flamme en surface conformément à l'invention, le produit subit une étape de surgélation (par l'une des multiples méthodes disponibles dans cette industrie, qu'il s'agisse de surgélation par froid dit mécanique ou qu'il s'agisse de froid cryogénique).

La présente invention trouve également une application tout particulièrement intéressante pour la fabrication de pains de mie tranchés, sans croute, fabrication comprenant au moins les étapes suivantes :
- une étape de cuisson d'une préparation menant à l'obtention d'un pain de mie cuit ;
- une étape d'élimination de la croute latérale du pain de mie ;
- une étape permettant de trancher transversalement le pain de mie sans croûte pour obtenir le pain de mie sans croûte et tranché recherché, et où conformément à l'invention, on soumet tout ou partie de la surface latérale du pain de mie sans croute, avant l'étape de tranchage, au contact d'une flamme produite par un brûleur, la flamme mise en oeuvre étant une flamme oxyhydrique, préférentiellement une flamme hydrogène/oxygène.

Selon des modes particuliers ou avantageux de mise en oeuvre de l'invention, celle-ci pourra adopter l'une ou plusieurs de caractéristiques techniques suivantes :
- les produits traités sont des produits transformés à base de viande ou des pièces de viandes.
- les produits traités sont des pains de mie dont la croute a été enlevée, le traitement intervenant avant leur tranchage.
- le traitement de pré-cuisson en surface selon l'invention n'est suivi d'aucun traitement de refroidissement du produit ou de la pièce traitée.
- le traitement de pré-cuisson en surface selon l'invention est suivi d'une étape de surgélation du produit ou de la pièce traitée.

D'autres caractéristiques et avantages de la présente invention apparaîtront alors plus clairement dans la description suivante, donnée à titre illustratif mais nullement limitatif, donnant les conditions d'exemples pratiques de mise en oeuvre de l'invention. Ces exemples ont été obtenus dans les conditions opératoires ci-après détaillées, on fournit dans ce qui suit les résultats de perte en eau, après cuisson du produit par l'utilisateur final, dans chaque cas.

Durant une première série d'essais, les produits traités étaient des steaks hachés de boeuf d'environ 45 grammes, caractérisés par une teneur en matières grasses voisine de 20%, précuits en surface selon l'invention avec une flamme H₂/O₂, puis cuits au four à microondes comme le ferait un utilisateur final.

On déterminait alors la différence de poids (moyenne de poids pour trois produits à chaque fois), avant et après cuisson finale au micro-ondes, selon que le steak a été ou non précuit en surface à la flamme selon l'invention (certains steaks étaient donc crus, non traités par l'invention, mais passés au micro-ondes).

Les résultats obtenus parlent d'eux même, ils démontrent une perte en eau indiscutablement moindre quand le produit a été précuit à la flamme selon l'invention :
- non précuits selon l'invention :
   Poids avant cuisson finale : 45,68 g
   Poids après cuisson finale : 35,52 g
   Différence de poids : 10,16 g
- selon l'invention :
   Poids avant cuisson finale (précuit en surface) : 44, 47 g
   Poids après cuisson finale : 37,80 g
   Différence de poids : 6,67 g

D'autres tests ont été réalisés avec des steaks ayant une teneur en matières grasses voisine de 17%, ici encore ils démontrent une perte en eau indiscutablement moindre quand le produit a été précuit à la flamme selon l'invention :
- non précuits selon l'invention :
   Poids avant cuisson finale : 44,86 g
   Poids après cuisson finale : 39,86 g
   Différence de poids : 5 g
- selon l'invention :
   Poids avant cuisson finale (précuit en surface) : 43,88 g
   Poids après cuisson finale : 41,98 g
   Différence de poids : 1,9 g

Les résultats développés ci-dessus illustrent le cas des produits carnés, à titre illustratif on décrit ci-dessous un exemple de mode de mise en oeuvre de l'invention pour traiter des pains de mie sans croute, avant leur tranchage :
- les pains en provenance de l'étape d'enlèvement de la croute circulent (dans le sens de leur longueur) sur un tapis inox, un certain nombre de bruleurs sont positionnés en parallèle du produit sur sa face supérieure et sur ses faces latérales (on va traiter ici trois faces).
- après avoir subi le traitement thermique et avant que le pain n'atteigne les lames de coupe, on lui fait faire un quart de tour sur lui-même (typiquement dans le sens des aiguilles d'une montre) puis on va basculer d'un quart le parallélépipède rectangle que représente le pain), pour que la face qui n'a pas subit de traitement thermique se retrouve à l'arrière (à l'opposé des lames).

On le voit ainsi il n'est pas nécessaire de traiter toutes les faces du pain, 3 faces permettent d'obtenir le résultat recherché.

## Revendications

1. Procédé de pré-cuisson en surface, de préférence en continu, de produits alimentaires, **se caractérisant en ce que** l'on met en contact tout ou partie de la surface du produit avec la flamme produite par un brûleur, la flamme mise en oeuvre étant une flamme oxyhydrique, préférentiellement une flamme hydrogène/oxygène.

2. Procédé de pré-cuisson en surface selon la revendication 1, **caractérisé en ce que** les produits traités sont des produits transformés à base de viande ou des pièces de viandes.

3. Procédé de pré-cuisson en surface selon la revendication 1 ou 2, **caractérisé en ce que** le traitement de pré-cuisson en surface n'est suivi d'aucun traitement de refroidissement du produit ou de la pièce traitée.

4. Procédé de pré-cuisson en surface selon la revendication 1 ou 2, **caractérisé en ce que** le traitement de pré-cuisson en surface selon l'invention est suivi d'une étape de surgélation du produit ou de la pièce traitée.

5. Procédé de pré-cuisson en surface selon la revendication 1, **caractérisé en ce que** les produits traités sont des pains de mie, l'étape de pré-cuisson en surface intervenant dans une fabrication de pains de mie tranchés, sans croute, fabrication comprenant au moins les étapes suivantes,:
- une étape de cuisson d'une préparation menant à l'obtention d'un pain de mie cuit ;
- une étape d'élimination de la croute latérale du pain de mie ;
- une étape permettant de trancher transversalement le pain de mie sans croûte pour obtenir le pain de mie sans croûte et tranché recherché,
et où l'on soumet tout ou partie de la surface latérale du pain de mie sans croute, avant l'étape de tranchage, au contact d'une flamme produite par un brûleur, la flamme mise en oeuvre étant une flamme oxyhydrique, préférentiellement une flamme hydrogène/oxygène.

## Patentansprüche

1. Verfahren zum Vorbacken auf der Oberfläche, vorzugsweise ununterbrochen, von Nahrungsmitteln, **dadurch gekennzeichnet, dass** die Gesamtheit oder ein Teil der Oberfläche des Produkts mit der Flamme in Kontakt gebracht wird, die von einem Brenner erzeugt wird, wobei die angewendete Flamme eine Knallgasflamme ist, vorzugsweise eine Wasserstoff-/Sauerstoffflamme.

2. Verfahren zum Vorbacken auf der Oberfläche nach Anspruch 1, **dadurch gekennzeichnet, dass** die behandelten Produkte auf der Grundlage von Fleisch oder Fleischteilen verarbeitete Produkte sind.

3. Verfahren zum Vorbacken auf der Oberfläche nach Anspruch 1 oder 2 **dadurch gekennzeichnet, dass** der Behandlung des Vorbackens auf der Oberfläche keine Behandlung des Abkühlens des Produkts oder des behandelten Teils folgt.

4. Verfahren zum Vorbacken auf der Oberfläche nach Anspruch 1 oder 2, **dadurch gekennzeichnet, dass** der Behandlung des Vorbackens auf der Oberfläche gemäß der Erfindung ein Schritt des Tiefkühlens des Produkts oder des behandelten Teils folgt.

5. Verfahren zum Vorbacken auf der Oberfläche nach Anspruch 1, **dadurch gekennzeichnet, dass** die behandelten Produkte Toastbrote sind, wobei der Schritt des Vorbackens bei einer Herstellung von in Scheiben geschnittenen Toastbroten ohne Rinde beteiligt ist, wobei die Herstellung mindestens die folgenden Schritte umfasst:
- einen Schritt des Backens einer Zubereitung, der dazu führt, ein gebackenes Toastbrot zu erhalten;
- einen Schritt des Entfernens der seitlichen Kruste des Toastbrots;
- einen Schritt, der es ermöglicht, das Toastbrot ohne Kruste quer in Scheiben zu schneiden, um das gewünschte Toastbrot ohne Kruste und in Scheiben zu erhalten,
und wobei die Gesamtheit oder ein Teil der seitlichen Fläche des Toastbrots ohne Kruste vor dem Schritt des Schneidens in Scheiben in Kontakt mit einer Flamme gebracht wird, die von einem Brenner erzeugt wird, wobei die angewendete Flamme eine Knallgasflamme, vorzugsweise eine Wasserstoff-/Sauerstoffflamme, ist.

## Claims

1. Method for precooking food products on the surface, preferably continuously, **characterised in that** all or part of the surface of the product is put in contact with the flame produced by a burner, the flame used being an oxyhydric flame, preferentially a hydrogen/oxygen flame.

2. Surface precooking method according to claim 1, **characterised in that** the products treated are processed products based on meat or pieces of meat.

3. Surface precooking method according to claim 1 or 2, **characterised in that** surface precooking treatment is not followed by any treatment of cooling of the product or of the treated piece.

4. Surface precooking method according to claim 1 or 2, **characterised in that** the surface precooking treatment according to the invention is followed by a step of deep-freezing of the product or of the treated piece.

5. Surface precooking method according to claim 1, **characterised in that** the treated products are sandwich breads, the surface precooking step occurring in a manufacture of sliced sandwich breads, without crust, a manufacture comprising at least the following steps:
- a step of cooking a preparation leading to the obtaining of a baked sandwich bread;
- a step of eliminating the lateral crust of the sandwich bread;
- a step for transversely slicing the crustless sandwich bread in order to obtain the required sliced crustless sandwich bread,
and where all or part of the lateral surface of the crustless sandwich bread is subjected, before the slicing step, to contact with a flame produced by a burner, the flame used being an oxyhydric flame, preferentially a hydrogen/oxygen flame.
